# EUROPEAN PATENT APPLICATION

(11) **EP 3 439 353 A1**
(43) Date of publication of application: **06.02.2019**
(21) Application number: 17184902.9
(22) Date of filing: 04.08.2017
(51) Int. Cl.: H04W 24/06, H04W 24/08

(54) **METHOD FOR PERFORMING END-TO-END TESTING OF AN EMERGENCY CALL OR QUALITY MANAGEMENT SYSTEM OR AN EMERGENCY CALL OR QUALITY MANAGEMENT FUNCTIONALITY, MOBILE COMMUNICATION NETWORK, AND SYSTEM, PROGRAM AND COMPUTER PROGRAM PRODUCT**

(71) Applicant: Deutsche Telekom AG, 53113 Bonn (DE)
(72) Inventor: BÜCHTER, Martin, 53773 Hennef (DE); KISTOWSKI-CAMES, Dirk, 53757 Sankt Augustin (DE); PTASCHNIK, Siegfried, 82418 Murnau (DE); KIRSCH, Maik, 53757 Sankt Augustin (DE); PAETEL, Lars, 53604 Bad Honnef (DE)
(74) Representative: Schwöbel, Thilo K.

(57) **Abstract**

The invention relates to a method for performing end-to-end testing of an emergency call or quality management system or an emergency call or quality management functionality, wherein the emergency call or quality management system or the emergency call or quality management functionality is used with a mobile communication network, at least one mobile communication device or user equipment being connected to the mobile communication network, wherein the mobile communication network comprises an access network, a core network, and a plurality of base station entities, and the mobile communication network comprising or being associated with a plurality of public safety answering points or a plurality of public safety answering point functionalities,
wherein the at least one mobile communication device or user equipment is an operative mobile communication device or user equipment, being used operatively with the mobile communication network, and having an operative device identification identifier and/or an operative subscription identification identifier assigned or related to the at least one mobile communication device or user equipment,
wherein at least one test mobile communication device is simultaneously connected to the mobile communication network, the at least one test mobile communication device, being used - with at least a part of the mobile communication network - for performing end-to-end testing of the emergency call or quality management system or the emergency call or quality management functionality,
wherein the method comprises the following steps:
-- in a first step, at least one test device identification identifier and/or test subscription identification identifier is defined for being used to perform end-to-end testing of the emergency call or quality management system or the emergency call or quality management functionality using the at least one test mobile communication device,
-- in a second step, subsequent to the first step, a test call is initiated or performed using the at least one test mobile communication device and the at least one test device identification identifier and/or test subscription identification identifier - the at least one test device identification identifier and/or test subscription identification identifier having been assigned to or having been associated to the at least one test mobile communication device -,
-- in a third step, subsequent to the second step, the use of the at least one test device identification identifier and/or test subscription identification identifier - while initiating or performing the test call - is detected by the mobile communication network.

## Description

### BACKGROUND

The present invention relates to a method for performing end-to-end testing of an emergency call or quality management system or an emergency call or quality management functionality, wherein the emergency call or quality management system or the emergency call or quality management functionality is used with a mobile communication network, at least one mobile communication device or user equipment being connected to the mobile communication network, and the mobile communication network comprising or being associated with a plurality of public safety answering points or a plurality of public safety answering point functionalities.

Furthermore, the present invention relates to a mobile communication network for performing end-to-end testing of an emergency call or quality management system or an emergency call or quality management functionality, wherein the emergency call or quality management system or the emergency call or quality management functionality is used with a mobile communication network, at least one mobile communication device or user equipment being connected to the mobile communication network, and the mobile communication network comprising or being associated with a plurality of public safety answering points or a plurality of public safety answering point functionalities.

Additionally, the present invention relates to a system for performing end-to-end testing of an emergency call or quality management system or an emergency call or quality management functionality, wherein the emergency call or quality management system or the emergency call or quality management functionality is used with a mobile communication network as part of the system, wherein the system also comprises at least one mobile communication device or user equipment and at least one test mobile communication device, the at least one mobile communication device or user equipment being connected to the mobile communication network, and the mobile communication network comprising or being associated with a plurality of public safety answering points or a plurality of public safety answering point functionalities.

Furthermore, the present invention relates to a program and to a computer program product for performing end-to-end testing of an emergency call or quality management system or an emergency call or quality management functionality.

In order to certify interoperability of implementations of emergency call or quality management functionalities, such as, e.g., eCall implementations, tests of such emergency call or quality management functionalities (especially eCall implementations or end-of-production quality checks or quality assurances) - especially conformance tests - have to be conducted, proving compliance, interoperability and essential performance criteria.

Conventionally in order to conduct such interoperability tests, a radio test-bed is realized or implemented which is typically distinct from the surrounding operating radio networks or mobile communications networks. Hence, such a conventional approach is based on the use of a system simulator that replicates an access and core network of a mobile communications network, or at least parts thereof. In such a conventionally used test-bed of a mobile communications network, typically test calls are conducted in order to test the implemented functionalities. This approach is feasible in surroundings that are sufficiently electromagnetically shielded or separated from the environment. In cases where this cannot be ascertained, there is a certain risk that:
-- such test calls are not connected to the simulator (or test-bed mobile communication network) with the needed reliability and/or
-- in case of malfunctions, the test calls run the risk to be connected to one of the surrounding operational networks and/or
-- that real emergency calls or quality management calls are connected to the simulator in the test-bed environment (and not to the operative mobile communication network). Hence typically, in order to be able to distinguish these radio test-beds from the surrounding operational networks, it is conventionally necessary to use a dedicated public land mobile network identity for the test-bed network. Typically this is conventionally done by building up a local test environment, i.e. by using a network simulator connected directly with an antenna or to build up a dedicated test network (including test base station entity (or base transceiver stations BTS) and/or mobile switching center entities MSC. However, typically all variants of a dedicated radio network (of a test-bed solution) require the local use of frequencies that are usually intended for operational networks. Hence, in a test operation, these frequencies cannot be used for other customers and/or in operational mobile communication networks; hence either a long-term dedication of the frequency ranges used in the test-bed is required, or the frequency resources are provided on a per test basis (wherein the latter typically requires a coordination with the licensee of the spectrum (i.e. regarding the time and the duration of the test, switching off and switching on the operational use of the frequencies and the like). Depending on the radio network planning of the commercial network donating the spectrum, interactions of the operating mobile communication network around or in the vicinity of the test-bed with the test-bed network are inevitable, and due to possible interactions with the public emergency services, such test-bed solutions might even require the approval of the responsible regulatory authority).

### SUMMARY

An object of the present invention is to provide a technically simple, effective and especially cost effective solution for performing end-to-end testing of an emergency call or quality management system or an emergency call or quality management functionality in a cost-effective manner and such that testing is able to be realized easily at different locations, and with a minimum risk of false routing of the involved test calls.

The object of the present invention is achieved by a method for performing end-to-end testing of an emergency call or quality management system or an emergency call or quality management functionality, wherein the emergency call or quality management system or the emergency call or quality management functionality is used with a mobile communication network, at least one mobile communication device or user equipment being connected to the mobile communication network, wherein the mobile communication network comprises an access network, a core network, and a plurality of base station entities, and the mobile communication network comprising or being associated with a plurality of public safety answering points or a plurality of public safety answering point functionalities,
wherein the at least one mobile communication device or user equipment is an operative mobile communication device or user equipment, being used operatively with the mobile communication network, and having an operative device identification identifier and/or an operative subscription identification identifier assigned or related to the at least one mobile communication device or user equipment,
wherein at least one test mobile communication device is simultaneously connected to the mobile communication network, the at least one test mobile communication device, being used - with at least a part of the mobile communication network - for performing end-to-end testing of the emergency call or quality management system or the emergency call or quality management functionality,
wherein the method comprises the following steps:
-- in a first step, at least one test device identification identifier and/or test subscription identification identifier is defined for being used to perform end-to-end testing of the emergency call or quality management system or the emergency call or quality management functionality using the at least one test mobile communication device,
-- in a second step, subsequent to the first step, a test call is initiated or performed using the at least one test mobile communication device and the at least one test device identification identifier and/or test subscription identification identifier - the at least one test device identification identifier and/or test subscription identification identifier having been assigned to or having been associated to the at least one test mobile communication device -,
-- in a third step, subsequent to the second step, the use of the at least one test device identification identifier and/or test subscription identification identifier - while initiating or performing the test call - is detected by the mobile communication network.

It is thereby advantageously possible according to the present invention to enable tests for end to end system verification for eCall in-vehicle-systems that are built into cars. According to the present invention, it is also advantageously possible to take into account NIS ERA GLONASS tests in non-Russian countries. Furthermore, it is advantageously possible according to the present invention that a high dynamic range is provided for different realistic test cases. Furthermore, it is especially advantageous to easily realize such end-to-end system (or functionality) verification tests, especially for emergency call or quality management test call related functionalities, at different locations, in a cost efficient manner and with a minimized risk for a false routing of the test calls.

According to the present invention, it is assumed that an operative mobile communication network - serving "real" customers or users, typically using (operative) user equipments or (operative) mobile communication devices - exists within a certain geographical area. Hence, in order to operatively using such (operative) mobile communication device or (operative) user equipment, an operative device identification identifier and/or an operative subscription identification identifier assigned or related to each of these (operative) mobile communication devices or (operative) user equipments.

Furthermore, it is assumed according to the present invention that at least one test mobile communication device is simultaneously connected to the mobile communication network (operatively working with the at least one (operative) mobile communication device or (operative) user equipment, but typically working with a plurality of (operative) mobile communication devices or (operative) user equipments), the at least one test mobile communication device, being used - with at least a part of the mobile communication network - for performing end-to-end testing of the emergency call or quality management system or the emergency call or quality management functionality.

According to the present invention, in a first step, at least one test device identification identifier and/or test subscription identification identifier is defined for being used to perform end-to-end testing of the emergency call or quality management system or the emergency call or quality management functionality using the at least one test mobile communication device. However, typically, a plurality of different test device identification identifiers and/or test subscription identification identifiers is defined. In order to perform the end-to-end testing of an emergency call or quality management system or an emergency call or quality management functionality, a test call needs to be initiated or performed in a second step. According to the present invention, such test calls are exclusively initiated or performed using the at least one test device identification identifier and/or test subscription identification identifier (or the plurality of test device identification identifiers and/or test subscription identification identifiers) together with the corresponding test mobile communication device. In a third step, the use - while initiating or performing the test call - of the at least one test device identification identifier and/or test subscription identification identifier is detected by the mobile communication network.

According to a preferred embodiment of the present invention, the detection of the use of the at least one test device identification identifier and/or test subscription identification identifier is performed by the mobile communication network by means of accessing a database entity or database functionality, especially located at or accessible via the core network of the mobile communication network.

Thereby, it is advantageously possible according to the present invention to easily and detect the use of the test device identification identifier and/or test subscription identification identifier (or one of the plurality of the test device identification identifiers and/or test subscription identification identifiers), and, hence, to detect such test calls, and differentiate those from "normal" calls (initiated or performed by (operative) mobile communication devices and/or user equipment also present (and active) - along with the test mobile communication device or the plurality of test mobile communication devices - within the (operative) mobile communication network).

According to the present invention it is furthermore preferred that the database entity or database functionality comprises a set of test device identification identifiers and/or test subscription identification identifiers, the identifiers of the set of test device identification identifiers and/or test subscription identification identifiers being used to perform end-to-end testing of the emergency call or quality management system or the emergency call or quality management functionality using the at least one test mobile communication device.

It is thereby advantageously possible to use the test device identification identifiers and/or test subscription identification identifiers of the set with one or a plurality of test mobile communication devices such that complex and realistic test scenarios are possible to be implemented in an easy and straightforward manner.

According to the present invention it is furthermore preferred that the test call is detected to be a test call by means of determining:
-- whether any call, even a call being directed to a non-emergency call number, involves the use of the at least one test device identification identifier and/or test subscription identification identifier, or
-- whether a call being directed to an emergency call number, involves the use of the at least one test device identification identifier and/or test subscription identification identifier, or
-- whether a call being directed to an emergency call number and dedicated to an appropriate public safety answering point, involves the use of the at least one test device identification identifier and/or test subscription identification identifier.

It is thereby advantageously possible to implement different test cases and test scenarios.

According to a further preferred embodiment of the present invention, the set of test device identification identifiers and/or test subscription identification identifiers are mobile subscriber integrated services digital network numbers (MSISDN numbers), being assigned to or associated to the at least one test mobile communication device.

Thereby, it is advantageously possible to very easily detect a test call, and differentiated it from a non-test call (i.e. an operative call).

According to the present invention, the detection of a test call is based on the analysis of the MSISDN numbers associated with the test-calls and specific routing of the so-identified calls in the mobile communication network, especially the core network thereof. To identify and handle the test calls appropriately, the MSISDNs (used for the test calls or associated with the test calls) need to be known or to be defined in advance (hence, this definition is done in the first step of the inventive method).

As already mentioned, these MSISDN numbers are especially stored in a database entity (storing the pool of MSISDN numbers) which is connected with the mobile communication network, especially the core network thereof, or mobile core-network.

This database is interrogated especially in case a common emergency number (e.g. 112, 911, 110, 119 etc.) or a test call number is dialed. In case the analysis reveals that the MSISDN number associated with that call is part of the defined pool (or set) of test device identification identifiers and/or test subscription identification identifiers (especially MSISDN numbers), then the call (detected as being a test call) is routed to a predefined destination, and the call is referred to as test call.

It is especially preferred according to the present invention that the database (or database entity) is located in or close to the mobile switching center (MSC) or pool of mobile switching centers (MSC pool) that is connected to those base stations where the tests shall be conducted. While it might be recommended to define the pool (of test device identification identifiers and/or test subscription identification identifiers) once (and keep it unchanged for the purposes of a specific test or a specific number of tests), it is also possible - according to an alternative variant of the present invention - to update or extend the set (or pool) of test device identification identifiers and/or test subscription identification identifiers (especially the pool or set of MSISDN numbers) as necessary. In order to avoid a too frequent update, the numbers out of the pool could be reused for different tests, e.g. after the eSIM is "destroyed" after, e.g., a crash testing, the associated MSISDN can be reused for the next eSIM. With this, it is possible to limit number of required test device identification identifiers and/or test subscription identification identifiers (especially MSISDNs) per test campaign or test company (the test company might, e.g., be a car manufacturer).

According to a further preferred embodiment of the present invention, - upon detection of the use of the at least one test device identification identifier and/or test subscription identification identifier while initiating or performing the test call, especially while dialing - the test call is specifically routed, within the mobile communication network, in order to perform end-to-end testing of the emergency call or quality management system or the emergency call or quality management functionality. Especially, this specific routing involves at least one test public safety answering point or a plurality of test public safety answering point functionality within or associated with the mobile communication network.

Thereby, it is advantageously possible that a detected test call is handled differently (by means of applying a specific routing) by the mobile communication network, compared to a "normal" or operative call.

According to still a further preferred embodiment of the present invention, in case that - regarding an operative call - an operative device identification identifier and/or an operative subscription identification identifier, assigned or related to the at least one mobile communication device or user equipment, is detected in a fourth step prior, during or subsequent to the second and/or third step, the operative call is routed, within the mobile communication network, in a normal or operative manner, this normal or operative routing especially involving - in case that the operative call is an emergency call - one of the plurality of public safety answering points or the plurality of public safety answering point functionalities within or associated with the mobile communication network.

Thereby, it is advantageously possible that normal or operative calls are not influenced by conducting the end-to-end testing of the emergency call or quality management system or the emergency call or quality management functionality.

According to a further preferred embodiment of the present invention, the at least one test mobile communication device is part of or corresponds to an in-vehicle-system and/or wherein the emergency call or quality management system or the emergency call or quality management functionality is an eCall emergency call or quality management system and/or a NIS ERA GLONASS emergency system.

Thereby, it is advantageously possible to perform a multitude of different test cases or test scenarios.

According to still a further embodiment of the present invention, both in case of the test call or test calls as well as in case of the operative call or operative calls an identical public land mobile network identifier, PLMN ID, and/or identical radio transmission frequencies and/or time slots are used.

Thereby it is advantageously possible according to the present invention to strongly reduce the impact of performing the end-to-end tests in an operating mobile communication network.

Furthermore, the present invention relates to a mobile communication network for performing end-to-end testing of an emergency call or quality management system or an emergency call or quality management functionality, wherein the emergency call or quality management system or the emergency call or quality management functionality is used with a mobile communication network, at least one mobile communication device or user equipment being connected to the mobile communication network, wherein the mobile communication network comprises an access network, a core network, and a plurality of base station entities, and the mobile communication network comprising or being associated with a plurality of public safety answering points or a plurality of public safety answering point functionalities,
wherein the at least one mobile communication device or user equipment is an operative mobile communication device or user equipment, being used operatively with the mobile communication network, and having an operative device identification identifier and/or an operative subscription identification identifier assigned or related to the at least one mobile communication device or user equipment,
wherein at least one test mobile communication device is simultaneously connected to the mobile communication network, the at least one test mobile communication device, being used - with at least a part of the mobile communication network - for performing end-to-end testing of the emergency call or quality management system or the emergency call or quality management functionality,
wherein the mobile communication system is configured such as:
-- at least one test device identification identifier and/or test subscription identification identifier is defined for being used to perform end-to-end testing of the emergency call or quality management system or the emergency call or quality management functionality using the at least one test mobile communication device,
-- upon a test call being initiated or performed using the at least one test mobile communication device and the at least one test device identification identifier and/or test subscription identification identifier - the at least one test device identification identifier and/or test subscription identification identifier having been assigned to or having been associated to the at least one test mobile communication device -,
-- the use of the at least one test device identification identifier and/or test subscription identification identifier - while initiating or performing the test call - is detected by the mobile communication network.

Thereby, it is advantageously possible to provide a mobile communication network such that a high dynamic range is provided for different realistic test cases. Furthermore, it is especially advantageous to easily realize such end-to-end system (or functionality) verification tests, especially for emergency call related functionalities or quality management related functionalities, at different locations, in a cost efficient manner and with a minimized risk for a false routing of the test calls.

According to a further preferred embodiment of the present invention - especially with respect to the inventive mobile communication network -, the mobile communication network is configured such that the detection of the use of the at least one test device identification identifier and/or test subscription identification identifier is performed by the mobile communication network by means of accessing a database entity or database functionality, especially located at or accessible via the core network of the mobile communication network, wherein especially the database entity or database functionality comprises a set of test device identification identifiers and/or test subscription identification identifiers, the identifiers of the set of test device identification identifiers and/or test subscription identification identifiers being used to perform end-to-end testing of the emergency call or quality management system or the emergency call or quality management functionality using the at least one test mobile communication device.

Furthermore, the present invention relates to a system for performing end-to-end testing of an emergency call or quality management system or an emergency call or quality management functionality, wherein the emergency call or quality management system or the emergency call or quality management functionality is used with a mobile communication network as part of the system, wherein the system also comprises at least one mobile communication device or user equipment and at least one test mobile communication device, the at least one mobile communication device or user equipment being connected to the mobile communication network, wherein the mobile communication network comprises an access network, a core network, and a plurality of base station entities, and the mobile communication network comprising or being associated with a plurality of public safety answering points or a plurality of public safety answering point functionalities,
wherein the at least one mobile communication device or user equipment is an operative mobile communication device or user equipment, being used operatively with the mobile communication network, and having an operative device identification identifier and/or an operative subscription identification identifier assigned or related to the at least one mobile communication device or user equipment,
wherein the at least one test mobile communication device is simultaneously connected to the mobile communication network, the at least one test mobile communication device, being used - with at least a part of the mobile communication network - for performing end-to-end testing of the emergency call or quality management system or the emergency call or quality management functionality,
wherein the system is configured such as:
-- at least one test device identification identifier and/or test subscription identification identifier is defined for being used to perform end-to-end testing of the emergency call or quality management system or the emergency call or quality management functionality using the at least one test mobile communication device,
-- upon a test call being initiated or performed using the at least one test mobile communication device and the at least one test device identification identifier and/or test subscription identification identifier - the at least one test device identification identifier and/or test subscription identification identifier having been assigned to or having been associated to the at least one test mobile communication device -,
-- the use of the at least one test device identification identifier and/or test subscription identification identifier - while initiating or performing the test call - is detected by the mobile communication network.

Additionally, the present invention relates to a program comprising a computer readable program code which, when executed on a computer and/or on a component of a mobile communication network, causes the computer and/or the component of a mobile communication network to perform the inventive method.

Still additionally, the present invention relates to a computer program product for performing end-to-end testing of an emergency call or quality management system or an emergency call or quality management functionality, the computer program product comprising a computer program stored on a storage medium, the computer program comprising program code which, when executed on a computer and/or on a component of a mobile communication network, causes the computer and/or the component of a mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrate a mobile communication network having a plurality of base station entities and a plurality of mobile communication devices (or user equipments).
Figure 2 schematically illustrates an operative mobile communication device or user equipment being used, within the mobile communication network, especially for emergency calls, and a test mobile communication device being also used, within the mobile communication network, especially for emergency calls.
Figure 3 schematically illustrates a geographical area having a plurality of public safety answering points, wherein the geographical area is separated or divided in sub-areas, each sub-area having a different public safety answering point.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

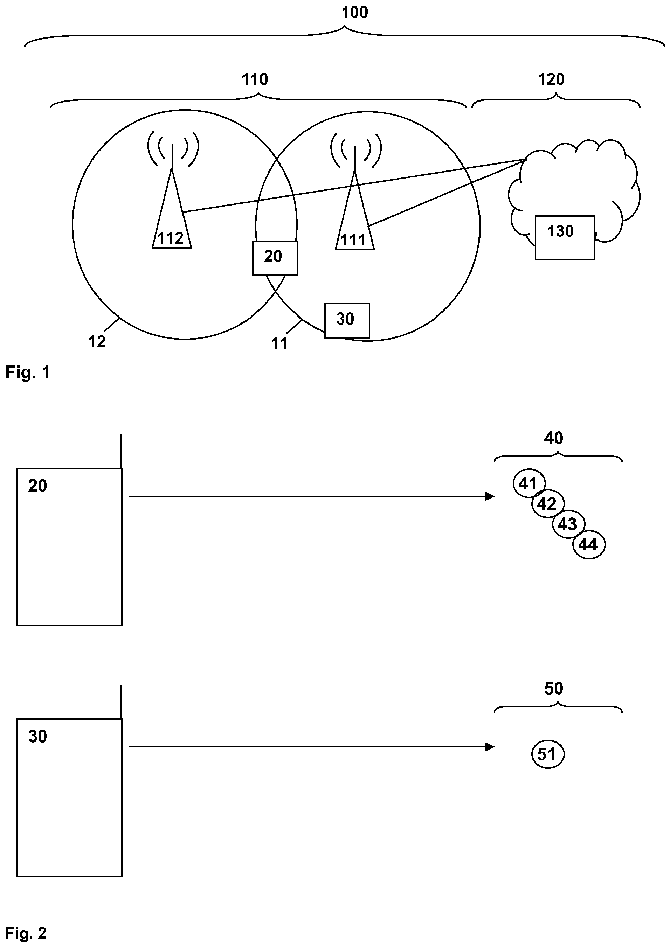

In Figure 1, a mobile communication network 100, especially a public land mobile network 100, is schematically shown, the mobile communication network 100 comprising an access network 110 and a core network 120. The mobile communication network 100 is preferably a cellular telecommunications network comprising typically a plurality of network cells (or radio cells), wherein two network cells (or radio cells) are represented in Figure 1 by means of reference signs 11 and 12. The mobile communication network 100 typically comprises a plurality of user equipments or mobile communication devices. The plurality of user equipments or of mobile communication devices are referred to by means of reference signs 20 and 30, wherein reference sign 20 refers to a operative mobile communication device or user equipment, and reference sign 30 refers to a test mobile communication device. The access network 110 of the mobile communication network 100 comprises, in the exemplary representation of Figure 1, a first base station entity 111, serving the (first) radio cell 11. Furthermore, a second base station entity 112, serving the neighbor (second) radio cell 12, is schematically shown. The base station entities 111, 112 are typically base stations, base transceiver stations or base station entities, e.g. a NodeB or an eNodeB base transceiver stations.

According to the present invention, end-to-end testing of an emergency call or quality management system or an emergency call or quality management functionality is able to be conducted within the mobile communication network 100 wherein the mobile communication network 100 is both used in an operative manner- serving operative mobile communication devices or user equipments 30 -, and for testing purposes - serving test mobile communication devices 20. In order to be able to execute emergency calls or quality management test calls, the mobile communication network 100 typically comprises or is associated with a plurality of public safety answering points 40 or a plurality of public safety answering point functionalities 40 or quality management test call endpoints. Each of such public safety answering points 40 is typically related (or assigned) to a specific part or sub-area of the (total) geographical area served by the mobile communication network 100.

According to the present invention, at least one mobile communication device or user equipment 20 (by typically a plurality of such mobile communication devices or user equipments) is operatively used within the mobile communication network 100, hence, an operative device identification identifier and/or an operative subscription identification identifier is assigned or related to typically each of the at least one mobile communication device or user equipment 20. Additionally, at least one test mobile communication device 30 (but likewise typically a plurality of such test mobile communication devices or user equipments 30) is simultaneously connected to the mobile communication network 100 in order to be used - with at least a part of the mobile communication network - for performing end-to-end testing of the emergency call or quality management system or the emergency call or quality management functionality.

According to the inventive method, in a first step, at least one test device identification identifier and/or test subscription identification identifier is defined for being used to perform the end-to-end testing using the at least one test mobile communication device 30. Typically, a plurality - such as a set or a pool of such test device identification identifiers and/or test subscription identification identifiers - of such test identifiers are used. According to the present invention, the set or pool of such test device identification identifiers and/or test subscription identification identifiers are stored in a database entity 130, depicted in Figure 1 schematically and exemplarily as part of the core network 120 of the mobile communication network 100. In case that a test call is initiated or performed (in a second step, i.e. subsequent to the first step) using the at least one test device identification identifier and/or test subscription identification identifier (or one of the plurality of test device identification identifiers and/or test subscription identification identifiers) - typically using a test mobile communication device 30 being assigned or associated to the at least one test device identification identifier and/or test subscription identification identifier, the use of the at least one test device identification identifier and/or test subscription identification identifier is detected (in a third step, i.e. while initiating or performing the test call) by the mobile communication network 100, and hence, it is possible to differentiate a test call from a normal or operative call within the mobile communication network 100.

The present invention also refers to the context of the pan European eCall system and the ERA GLONASS system. In the following, both systems are referred to as eCall unless otherwise specified. These systems enhance traditional emergency call systems using emergency call numbers such as the emergency number "112". eCalls are either generated manually or automatically. By setting up an eCall, a voice connection with the most appropriate (i.e. typically serving a specific geographical area or sub-area) public safety answering point (PSAP) is established. At the same time, a minimum set of data (MSD) is sent to the respective public safety answering point receiving the voice call. The MSD contains vital data such as the location of the vehicle using a global navigation satellite system (such as GLONASS, GPS, or Galileo), incident time and vehicle description. The eCall domains comprise the car domain which has to be equipped with an In-Vehicle-System (IVS), corresponding to a radio stack which, in case of emergency, sets up a voice call and transmits the emergency related data. In addition the IVS comprises a GNSS based positioning system to determine the current location of the vehicle. Furthermore, the eCall domains comprise a network domain to transport the data. While it was required that eCall is based on the European emergency number 112, means have to be established to distinguish traditional emergency calls (voice) from eCalls (Voice + Data). The public safety answering point have to be equipped so that the data transmitted with an eCall can be processed. As the implementation of the eCall service is at least at European level and/or Russian Federation level and/or even larger level, a harmonized approach, interoperability and cross border continuity, is subject to common standards as defined, e.g., by ETSI (European Telecommunications Standards Institute), CEN (Comité Européen de Normalisation, European Committee for Standardization) or GOST (Gossudarstwenny Standart). Interoperability and eCall service harmonization are critical challenges to be taken into account for the successful deployment and operation of the eCall system, e.g. for the type-approval of new vehicles in the Russian Federation, a certified NIS ERA GLONASS emergency system has been mandatory in the vehicle, and similar requirements will be applicable for the type-approval of new vehicles in the European Union.

Figure 2 schematically illustrates an operative mobile communication device or user equipment 20 being used, within the mobile communication network 100, especially for emergency calls or quality management test calls. In case of the operative mobile communication device or user equipment 20 is used to conduct an emergency call or a quality management test call, the call is routed to one of a plurality of public safety answering points 40 or to a quality management test call endpoint. In Figure 2, four individual public safety answering points, a first public safety answering point 41, a second public safety answering point 42, a third public safety answering point 43, and a fourth public safety answering point 44 are schematically represented. Which individual public safety answering point is used for a specific emergency call of the operative mobile communication device or user equipment 20 typically depends where the operative mobile communication device or user equipment 20 is located. Furthermore, figure 2 schematically illustrates a test mobile communication device 30 being also used, within the mobile communication network 100, especially for emergency calls. Such test calls, especially test emergency calls are directed to a test public safety answering point 50, comprising - in the exemplary situation represented in Figure 2 - one individual test public safety answering point 51.

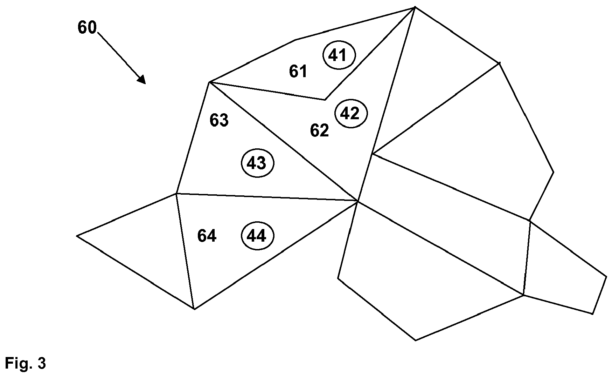

Figure 3 schematically illustrates a geographical area 60 having a plurality of public safety answering points 41, 42, 43, 44. The geographical area 60 is separated or divided in sub-areas 61, 62, 63, 64, wherein each sub-area 61, 62, 63, 64 has a different (individual) public safety answering point 41, 42, 43, 44.

According to the present invention, it is preferred that the detection of the use of one of the test device identification identifiers and/or test subscription identification identifiers is performed by the mobile communication network 100 by means of accessing the database entity 130 or database functionality 130. The database entity 130 or database functionality 130 is especially - but not necessarily - located at or accessible via the core network 120 of the mobile communication network 100. Alternatively (not depicted in Figure 1), the database entity 130 or database functionality 130 might be located in or close to the mobile switching center (MSC) or pool of mobile switching centers (MSC pool) that is connected to those base stations where the tests shall be conducted.

According to the present invention, normal or operative calls are processed by the mobile communication system 100 as if no test calls were present or performed. This means that - regarding an operative call - if an operative device identification identifier and/or an operative subscription identification identifier (assigned or related to the mobile communication device 20 or user equipment 20) is detected in a fourth step prior, during or subsequent to the second and/or third step, the operative call is routed, within the mobile communication network 100, in a normal or operative manner. This normal or operative routing especially involves - in case that the operative call is an emergency call - one of the plurality of public safety answering points 40 or the plurality of public safety answering point functionalities 40 within or associated with the mobile communication network 100.

In order to detect a test call different embodiments are possible in the context of the present invention. A (or any) test call might be detected to be a test call by means of determining:
-- whether any call, even a call being directed to a non-emergency call number, involves the use of the at least one test device identification identifier and/or test subscription identification identifier (i.e. especially all calls incoming MSISDNs are analyzed and processed whether test call identifiers are used), or
-- whether a call being directed to an emergency call number, involves the use of the at least one test device identification identifier and/or test subscription identification identifier (i.e. especially all calls to a commonly used emergency number (e.g. 112, 911, 110, 119 etc.) are analyzed and processed whether test call identifiers are used), or
-- whether a call being directed to an emergency call number and dedicated to an appropriate public safety answering point, involves the use of the at least one test device identification identifier and/or test subscription identification identifier (i.e. especially all calls to a commonly used emergency number (e.g. 112, 911, 110, 119 etc.) and dedicated to the appropriate PSAP are analyzed and processed whether test call identifiers are used).
Especially, in case the call holds an MSISDN number that is part of the pool, the call is routed according to predefined conditions (e.g. PSAP simulator, or test public safety answering point 50). In normal operation, meaning that the call is associated with a MSISDN that is not part of the pool of test identifiers, the call is routed to the appropriate Public Safety Answering Point (PSAP) 40 according to the applicable rules.

It is preferable to register the in-vehicle-system (corresponding to the test mobile communication device 30) to the mobile communication network 100 in order to make the test identifier (especially the MSISDN number) of the Test-Call available for analysis. To ensure that the in-vehicle-system registers to the mobile communication network 100, either the IMSI (International mobile subscriber identity) deployed in the in-vehicle-system is known by the mobile communication network 100, or the credentials of the SIM Profile are configured so that the in-vehicle-system is known in the mobile communication network 100.

In case the in-vehicle-system holds more multiple SIM profiles (subscriber identity module profiles), it is preferred that each profile or only those profiles required for the test scenario are configured in a way that the credentials associated with those profiles allow to register to the mobile communication network 100. The MSISDNs of each such profile have to be part of the pool of test identifiers. By this, the profile which is active when placing the emergency-call as a test call can be identified, and handled according to predefined conditions.

The test setup according to the present invention also allows to be deployed for testing NIS ERA GLONASS mandatory SMS fallback solution. The following advantages are realized by means of the present invention:
-- the solution can be is based on commercial mobile communication networks 100,
-- it is not necessary to set up and operate dedicated radio test networks,
-- agreements or arrangements for the use of frequencies for tests (such as crash tests) and additional preparation and time which might be necessary to allocate frequencies for the duration of the tests are not necessary,
-- it is not necessary to use a dedicated PLMN ID for building up a dedicated test / trial network,
-- the risk that test calls are routed towards an operational public safety answering point are minimized,
-- operational emergency calls or quality management test calls are not impeded in proximity to the radio test bed.

According to the present invention, the following processing steps are used: In a first processing step, the in-vehicle-system or the test mobile communication entity 30 calls the appropriate emergency call number (such as, e.g., 112 or another test number).
In a second processing step, the MSC recognizes - by means of accessing or by means of previously having accessed the database entity 130 or database functionality 130 -the MSISDN number (or other test call identifier) of the call is part of the specified MSISDN test pool (or pool of specified test call identifiers).
In a third processing step, the test call is routed according to predefined conditions such that the public safety answering point simulator (or test public safety answering point) takes the test call.

According to the present invention, it is advantageously possible that a test setup of an end-to-end validation of eCall and especially variants of eCall like NIS ERA Glonass can be done in a life (i.e. operative) mobile communication network 100. Especially, test calls of an eCall system of a country can be done by using normal local MSISDN numbers. Additionally, test calls of an eCall system, like NIS ERA Glonass testing in European countries, can be done by modifying the SIM profile deploying credentials that allow the in-vehicle-system 30 to register to the mobile communication network 100 but without altering the behavior (here especially the NIS ERA Glonass). The modification of the SIM profile can be done e.g. via OTA (over the air) or other appropriate means or mechanisms. It is advantageously possible, with the present invention, that test calls can be differentiated from normal (or operative) calls in a life network element, especially in the MSC, such that the thereby selected calls (test calls) are routed to a specific location where, e.g., the PSAP simulator (or test public safety answering point 50) is connected. The location can be in the test lab of the testing company, but also at any other place or, e.g., in another country. As a connection means, a telephone line can be used, but also any other kind of connection means, like a VoIP (Voice over IP) or an internet connection are also suitable.

## Claims

1. Method for performing end-to-end testing of an emergency call or quality management system or an emergency call or quality management functionality, wherein the emergency call or quality management system or the emergency call or quality management functionality is used with a mobile communication network (100), at least one mobile communication device (20) or user equipment (20) being connected to the mobile communication network (100), wherein the mobile communication network (100) comprises an access network (110), a core network (120), and a plurality of base station entities (111, 112), and the mobile communication network (100) comprising or being associated with a plurality of public safety answering points (40) or a plurality of public safety answering point functionalities (40) or especially one or a plurality of quality management test call endpoint(s),
wherein the at least one mobile communication device (20) or user equipment (20) is an operative mobile communication device (20) or user equipment (20), being used operatively with the mobile communication network (100), and having an operative device identification identifier and/or an operative subscription identification identifier assigned or related to the at least one mobile communication device (20) or user equipment (20),
wherein at least one test mobile communication device (30) is simultaneously connected to the mobile communication network (100), the at least one test mobile communication device (30), being used - with at least a part of the mobile communication network (100) - for performing end-to-end testing of the emergency call or quality management system or the emergency call or quality management functionality,
wherein the method comprises the following steps:
-- in a first step, at least one test device identification identifier and/or test subscription identification identifier is defined for being used to perform end-to-end testing of the emergency call or quality management system or the emergency call or quality management functionality using the at least one test mobile communication device (30),
-- in a second step, subsequent to the first step, a test call is initiated or performed using the at least one test mobile communication device (30) and the at least one test device identification identifier and/or test subscription identification identifier - the at least one test device identification identifier and/or test subscription identification identifier having been assigned to or having been associated to the at least one test mobile communication device (30) -,
-- in a third step, subsequent to the second step, the use of the at least one test device identification identifier and/or test subscription identification identifier - while initiating or performing the test call - is detected by the mobile communication network (100).

2. Method according to claim 1, wherein the detection of the use of the at least one test device identification identifier and/or test subscription identification identifier is performed by the mobile communication network (100) by means of accessing a database entity (130) or database functionality (130), especially located at or accessible via the core network (120) of the mobile communication network (100).

3. Method according to one of the preceding claims, wherein the database entity (130) or database functionality (130) comprises a set of test device identification identifiers and/or test subscription identification identifiers, the identifiers of the set of test device identification identifiers and/or test subscription identification identifiers being used to perform end-to-end testing of the emergency call or quality management system or the emergency call or quality management functionality using the at least one test mobile communication device (30).

4. Method according to one of the preceding claims, wherein the test call is detected to be a test call by means of determining:
-- whether any call, even a call being directed to a non-emergency call or quality management number, involves the use of the at least one test device identification identifier and/or test subscription identification identifier, or
-- whether a call being directed to an emergency call or quality management number, involves the use of the at least one test device identification identifier and/or test subscription identification identifier, or
-- whether a call being directed to an emergency call or quality management number and dedicated to an appropriate public safety answering point, involves the use of the at least one test device identification identifier and/or test subscription identification identifier.

5. Method according to one of the preceding claims, wherein the set of test device identification identifiers and/or test subscription identification identifiers are mobile subscriber integrated services digital network numbers, being assigned to or associated to the at least one test mobile communication device (30).

6. Method according to one of the preceding claims, wherein - upon detection of the use of the at least one test device identification identifier and/or test subscription identification identifier while initiating or performing the test call, especially while dialing - the test call is specifically routed, within the mobile communication network (100), in order to perform end-to-end testing of the emergency call or quality management system or the emergency call or quality management functionality, this specific routing especially involving at least one test public safety answering point (50) or a plurality of test public safety answering point functionality (50) within or associated with the mobile communication network (100).

7. Method according to one of the preceding claims, wherein, in case that - regarding an operative call - an operative device identification identifier and/or an operative subscription identification identifier, assigned or related to the at least one mobile communication device (20) or user equipment (20), is detected in a fourth step prior, during or subsequent to the second and/or third step, the operative call is routed, within the mobile communication network (100), in a normal or operative manner, this normal or operative routing especially involving - in case that the operative call is an emergency call - one of the plurality of public safety answering points (40) or the plurality of public safety answering point functionalities (40) within or associated with the mobile communication network (100).

8. Method according to one of the preceding claims, wherein the at least one test mobile communication device (30) is part of or corresponds to an in-vehicle-system and/or wherein the emergency call system or the emergency call functionality is an eCall emergency call system and/or a NIS ERA GLONASS emergency system.

9. Method according to one of the preceding claims, wherein both in case of the test call or test calls as well as in case of the operative call or operative calls an identical public land mobile network identifier, PLMN ID, and/or identical radio transmission frequencies and/or time slots are used.

10. Mobile communication network (100) for performing end-to-end testing of an emergency call or quality management system or an emergency call or quality management functionality, wherein the emergency call or quality management system or the emergency call or quality management functionality is used with a mobile communication network (100), at least one mobile communication device (20) or user equipment (20) being connected to the mobile communication network (100), wherein the mobile communication network (100) comprises an access network (110), a core network (120), and a plurality of base station entities (111, 112), and the mobile communication network (100) comprising or being associated with a plurality of public safety answering points (40) or a plurality of public safety answering point functionalities (40) or especially one or a plurality of quality management test call endpoint(s),
wherein the at least one mobile communication device (20) or user equipment (20) is an operative mobile communication device (20) or user equipment (20), being used operatively with the mobile communication network (100), and having an operative device identification identifier and/or an operative subscription identification identifier assigned or related to the at least one mobile communication device (20) or user equipment (20),
wherein at least one test mobile communication device (30) is simultaneously connected to the mobile communication network (100), the at least one test mobile communication device (30), being used - with at least a part of the mobile communication network (100) - for performing end-to-end testing of the emergency call or quality management system or the emergency call or quality management functionality,
wherein the mobile communication system (100) is configured such as:
-- at least one test device identification identifier and/or test subscription identification identifier is defined for being used to perform end-to-end testing of the emergency call or quality management system or the emergency call or quality management functionality using the at least one test mobile communication device (30),
-- upon a test call being initiated or performed using the at least one test mobile communication device (30) and the at least one test device identification identifier and/or test subscription identification identifier- the at least one test device identification identifier and/or test subscription identification identifier having been assigned to or having been associated to the at least one test mobile communication device (30) -,
-- the use of the at least one test device identification identifier and/or test subscription identification identifier - while initiating or performing the test call - is detected by the mobile communication network (100).

11. Mobile communication network (100) according to claim 10, wherein the mobile communication network (110) is configured such that the detection of the use of the at least one test device identification identifier and/or test subscription identification identifier is performed by the mobile communication network (100) by means of accessing a database entity (130) or database functionality (130), especially located at or accessible via the core network (120) of the mobile communication network (100), wherein especially the database entity (130) or database functionality (130) comprises a set of test device identification identifiers and/or test subscription identification identifiers, the identifiers of the set of test device identification identifiers and/or test subscription identification identifiers being used to perform end-to-end testing of the emergency call or quality management system or the emergency call or quality management functionality using the at least one test mobile communication device (30).

12. System for performing end-to-end testing of an emergency call or quality management system or an emergency call or quality management functionality, wherein the emergency call or quality management system or the emergency call or quality management functionality is used with a mobile communication network (100) as part of the system, wherein the system also comprises at least one mobile communication device (20) or user equipment (20) and at least one test mobile communication device (30), the at least one mobile communication device (20) or user equipment (20) being connected to the mobile communication network (100), wherein the mobile communication network (100) comprises an access network (110), a core network (120), and a plurality of base station entities (111, 112), and the mobile communication network (100) comprising or being associated with a plurality of public safety answering points (40) or a plurality of public safety answering point functionalities (40) or especially one or a plurality of quality management test call endpoint(s),
wherein the at least one mobile communication device (20) or user equipment (20) is an operative mobile communication device (20) or user equipment (20), being used operatively with the mobile communication network (100), and having an operative device identification identifier and/or an operative subscription identification identifier assigned or related to the at least one mobile communication device (20) or user equipment (20),
wherein the at least one test mobile communication device (30) is simultaneously connected to the mobile communication network (100), the at least one test mobile communication device (30), being used - with at least a part of the mobile communication network (100) - for performing end-to-end testing of the emergency call or quality management system or the emergency call or quality management functionality,
wherein the system is configured such as:
-- at least one test device identification identifier and/or test subscription identification identifier is defined for being used to perform end-to-end testing of the emergency call or quality management system or the emergency call or quality management functionality using the at least one test mobile communication device (30),
-- upon a test call being initiated or performed using the at least one test mobile communication device (30) and the at least one test device identification identifier and/or test subscription identification identifier - the at least one test device identification identifier and/or test subscription identification identifier having been assigned to or having been associated to the at least one test mobile communication device (30) -,
-- the use of the at least one test device identification identifier and/or test subscription identification identifier - while initiating or performing the test call - is detected by the mobile communication network (100).

13. Program comprising a computer readable program code which, when executed on a computer and/or on a component of a mobile communication network (100), causes the computer and/or the component of a mobile communication network (100) to perform a method according one of claims 1 to 9.

14. Computer program product for performing end-to-end testing of an emergency call or quality management system or an emergency call or quality management functionality, the computer program product comprising a computer program stored on a storage medium, the computer program comprising program code which, when executed on a computer and/or on a component of a mobile communication network (100), causes the computer and/or the component of a mobile communication network (100) to perform a method according one of claims 1 to 9.
